# FASCICULE DE BREVET EUROPEEN

(11) **EP 4 630 221 B1**
(45) Date de publication et mention de la délivrance du brevet: **25.11.2026**
(21) Numéro de dépôt: 23820803.7
(22) Date de dépôt: 04.12.2023
(51) Int. Cl.: B29C 49/70, B29C 49/48, B29C 49/54, B29C 49/12, B29C 49/42, B29L 31/00

(54) **UNITE DE MOULAGE DE RECIPIENTS AVEC SYSTEME DE DECOLLEMENT DU FOND**
BEHÄLTERFORMEINHEIT MIT BODENTRENNSYSTEM
CONTAINER MOULDING UNIT WITH BOTTOM DETACHMENT SYSTEM

(30) Priorité: 09.12.2022 FR 2213080; 04.08.2023 FR 2308505
(43) Date de publication de la demande: 15.10.2025
(73) Titulaire: Sidel Participations, 76930 Octeville-sur-Mer (FR)
(72) Inventeur: BARBEY, Arnaud, 76930 Octeville-sur-Mer (FR); BOURDEL, Yves, 76930 Octeville-sur-Mer (FR)
(74) Mandataire: Sidel Group
(86) Numéro de dépôt international: PCT/EP2023/084102
(87) Numéro de publication internationale: WO 2024/121049

(56) Documents cités:
- CN-A- 113 858 592
- JP-A- 2000 102 970
- JP-A- 2001 088 202
- JP-A- H05 345 350
- US-A1- 2009 130 246
- US-A1- 2017 291 346
- US-A1- 2020 262 128
- US-B2- 10 232 545

## Description

### Domaine technique

La présente invention concerne la fabrication de récipients, tels que des bouteilles, qui sont produits par moulage étirage-soufflage à partir de préformes de matière plastique (principalement thermoplastique, par exemple du PET ou du PET recyclé dit rPET).

### Etat de la technique

Dans le domaine de l'emballage, il est bien connu qu'un récipient comprend une partie de paroi (généralement de forme cylindrique), un col ouvert à une extrémité supérieure de la partie de paroi, et un fond fermé à une extrémité inférieure de la partie de paroi.

La fabrication d'un récipient par soufflage comprend généralement l'insertion d'une préforme, également communément appelée ébauche, dans une unité de moulage ayant une paroi latérale de moule définissant une contre-empreinte de la partie de paroi du récipient et un fond de moule définissant une contre-empreinte du fond du récipient, ladite préforme ayant été préalablement chauffée à une température supérieure à la température de transition vitreuse du matériau, et l'injection à l'intérieur de la préforme chaude d'un fluide (tel que de l'air) sous pression. Le soufflage peut être (et est généralement) complété par un étirement de la préforme au moyen d'une tige coulissante dite tige d'étirage qui est introduite dans la préforme.

Ainsi, le moulage par soufflage tout en étant étiré dans la direction longitudinale par une tige d'étirage prévue coaxialement est bien connu. US 2020/0262128 A1, WO 2016/100484 A1, US 9004897 B2, US 2009/0130246 A1, JP 2000-102970 A, JP H05-345350 A, CN 113858592 A, JP 2001-088202 A divulguent l'état de la technique pertinent. Par exemple, le document US 2020/0262128 A1 divulgue une unité conforme au préambule de la revendication 1.

Par ailleurs, comme la quantité de matériau nécessaire à la fabrication de chaque récipient diminue continuellement au fil des ans pour des raisons économiques et environnementales, il est nécessaire d'améliorer la rigidité structurelle du récipient.

L'amélioration de la rigidité structurelle de la portion de paroi est réalisée de manière connue au moyen d'une série de gorges annulaires formant des raidisseurs dont la fonction est de minimiser le risque d'ovalisation du récipient (c'est-à-dire la déformation de la section du récipient d'une forme circulaire à une forme ovale).

Plusieurs techniques sont également connues pour assurer la rigidité structurelle du fond du récipient. Une technique consiste à doter le fond du conteneur d'artefacts de rigidification tels que des nervures, dont la fonction est de minimiser le risque d'effondrement du fond sous les contraintes de flexion dues à la pression hydrostatique du contenu et, éventuellement, au poids des conteneurs superposés d'une même palette.

Une autre technique consiste à prévoir un étirement supplémentaire du matériau du fond du conteneur pour augmenter mécaniquement sa cristallinité (et donc sa rigidité mécanique). Comme indiqué dans la demande PCT publiée WO 99/52701, ceci est généralement réalisé au moyen d'un fond de moule mobile monté de manière coulissante par rapport à la paroi latérale du moule, de sorte que le matériau du récipient est d'abord soufflé au-delà de la forme finale dans une position rétractée de la base de moule, puis estampé à la forme finale par le déplacement du fond de moule vers une position relevée dans laquelle elle complète, avec la paroi latérale du moule, la contre-impression du récipient. L'unité de moulage comprend une enveloppe cylindrique et au moins une partie du fond de moule a un support cylindrique reçu de manière coulissante dans l'enveloppe cylindrique.

Le fond de moule est généralement déplacé au moyen d'un actionneur linéaire tel qu'un vérin hydraulique ou pneumatique, comprenant un boîtier cylindrique et une tige qui est montée de manière coulissante à l'intérieur du boîtier et à laquelle la chemise du cylindre du fond de moule est fixée.

Toutefois, la surface extérieure du fond embossé du récipient ainsi soufflé dans le moule adhère à la surface inférieure interne du fond de moule de sorte qu'il est difficile de retirer le récipient sans que le fond du récipient ne se retourne, rendant le récipient inutilisable.

### Divulgation de l'invention

L'un des buts de l'invention est donc de remédier à ces inconvénients en proposant à ces inconvénients en proposant une unité de moulage de conception simple et peu onéreuse et permettant un retrait du récipient moulé sans que le fond du récipient ne se retourne tout en refroidissant ledit fond du récipient et tout en refroidissant également une partie mécanique sans avoir recours à une circulation interne fluidique.

A cet effet et conformément à l'invention, il est proposé une unité de moulage pour la fabrication d'un récipient à partir d'une préforme en matière plastique, selon la revendication 1.

Par ailleurs, l'axe desdits orifices forme, de préférence, avec l'axe longitudinal de l'insert un angle compris entre 30 et 80°.

Accessoirement, le canal central du fond de moule comporte, au moins au-dessus des canaux débouchant dans ledit canal central, un joint d'étanchéité.

Par ailleurs, l'axe desdits canaux du fond de moule forme avec l'axe longitudinal de l'insert un angle compris entre 20 et 80°.

Par ailleurs, les orifices de l'insert sont angulairement répartis autour de la paroi latérale dudit insert.

De plus, les canaux du fond de moule sont également angulairement répartis autour de l'axe central dudit fond de moule.

De manière avantageuse, ladite unité de moulage comporte des moyens d'activation de circulation du fluide sous pression dans le fond de moule et/ou dans l'insert dans le cycle de fabrication des récipients aptes à contrôler le début de ladite activation et le temps d'activation de manière à favoriser le décollement de la paroi du fond du récipient soufflé et/ou de refroidir l'insert et/ou le fond de moule. Brève description des dessins

D'autres avantages et caractéristiques ressortiront mieux de la description qui va suivre de plusieurs variantes d'exécution, données à titre d'exemples non limitatifs, de l'unité de moulage conforme à l'invention, en référence aux dessins annexés sur lesquels :
[Fig. 1] est une vue en perspective de l'unité de moulage suivant l'invention,
[Fig. 2] est une vue en coupe radiale de l'unité de moulage suivant l'invention représentée sur la figure 1,
[Fig. 3] est une vue en coupe radiale et en perspective de la sellette de l'unité de moulage suivant l'invention,
[Fig. 4] est une vue en coupe radiale de la sellette de l'unité de moulage suivant l'invention,
[Fig. 5] est une vue en perspective de dessus du fond de moule et de l'insert de l'unité de moulage suivant l'invention,
[Fig. 6] est une vue en coupe radiale de la sellette de l'unité de moulage suivant l'invention, avec l'insert en position rétractée,
[Fig. 7] est une vue en coupe radiale de la sellette de l'unité de moulage suivant l'invention, avec l'insert en position déployée.

### Mode de réalisation de l'invention

Dans la suite de la description de l'unité de moulage suivant l'invention, les mêmes références numériques désignent les mêmes éléments. Les différentes vues ne sont pas nécessairement tracées à l'échelle.

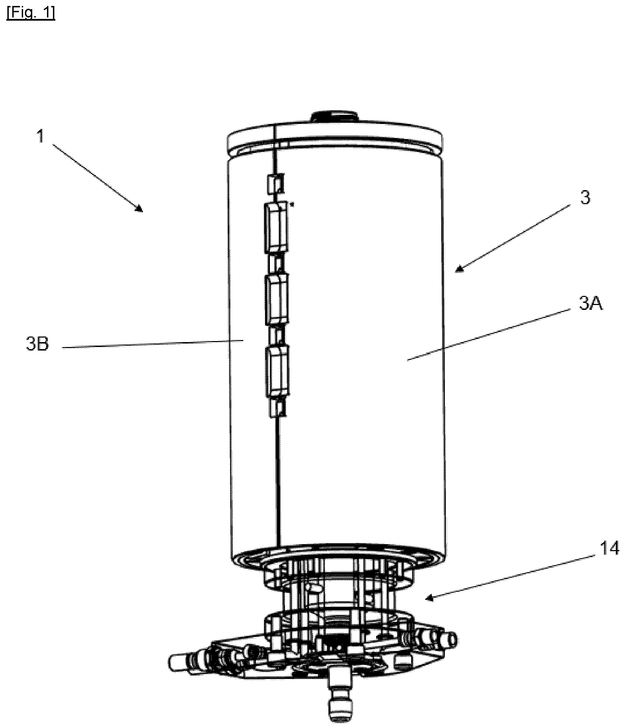

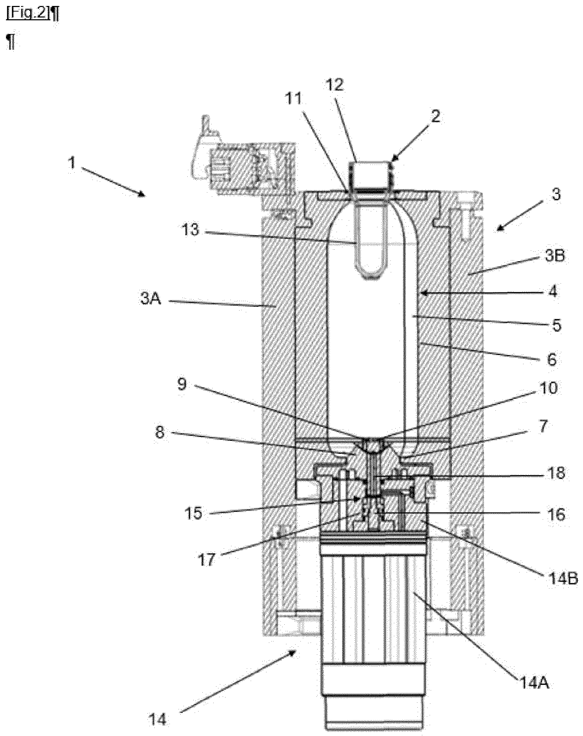

Sur les figures 1 et 2 est représentée une unité de moulage 1 pour la fabrication d'un récipient par soufflage (ou par étirage soufflage) à partir d'une ébauche 2 en matière plastique. Dans l'exemple illustré, l'ébauche 2 est une préforme, mais il pourrait s'agir d'un récipient intermédiaire obtenu à partir d'une préforme ayant subi une ou plusieurs opérations préliminaires de formage. Selon un mode préféré de réalisation, la matière dans laquelle est réalisée l'ébauche est un PET et/ou en rPET (PET recyclé).

Ladite unité de moulage 1 comprend, en premier lieu, un moule 3. Ce moule 3 comprend une paroi 4 formée par deux demi-moules 3A, 3B articulés, définissant une cavité 5 interne répartie autour d'un axe principal du moule 3 qui, lorsque les récipients à former sont symétriques de révolution, forme un axe de symétrie du moule 3.

La cavité 5 définit au moins partiellement une empreinte 6 pour une paroi latérale ou corps du récipient. La paroi 4 présente une ouverture 7 définissant un passage pour un fond de moule 8 muni d'une ouverture centrale 9 et comprenant un insert 10 monté mobile par rapport au fond de moule 8 entre une position rétractée dans laquelle l'insert 10 est écarté de l'ouverture 9 (et s'étend donc en retrait par rapport à la cavité 5), et une position déployée dans laquelle l'insert 10 fait au moins en partie saillie du fond de moule 8 dans la cavité 5.

Ledit fond de moule 8 présente une surface 9 de moulage définissant une empreinte pour la partie concernée du récipient 2. En position déployée, l'insert 10 fait saillie du fond de moule 8, complétant ainsi l'empreinte du récipient, contre laquelle est appliquée la matière lors du soufflage. On appelle « course » de l'insert 10 la distance séparant la position rétractée de la position déployée. A des fins de clarté, on a représenté le moule 3 dans une configuration où la course de l'insert 10 est relativement importante au regard de la hauteur du récipient. Cette configuration n'est nullement limitative ; au contraire, la course de l'insert 10 peut être faible au regard de la hauteur du récipient sans pour autant sortir du cadre de l'invention.

Par ailleurs, ledit fond de moule 8 peut être monté mobile par rapport à la paroi 4 entre une position rétractée dans laquelle le fond de moule 8 est écarté de l'ouverture 7 (et s'étend donc en retrait par rapport à la cavité 5), et une position déployée dans laquelle le fond de moule 8 fait au moins en partie saillie dans la cavité 5.

Comme illustré sur la figure 2, l'ébauche 2, puis le récipient formé à partir de celle-ci, reposent sur une face supérieure du moule 3 par l'intermédiaire d'une collerette 11 de l'ébauche 2 (respectivement du récipient), qui délimite un col 12 de l'ébauche 2 (respectivement du récipient), maintenu hors du moule 3. Sous la collerette 11, l'ébauche 2 (puis le récipient) présente un corps 13, qui s'étend globalement suivant la direction axiale, et un fond, qui est d'abord hémisphérique, puis, une fois formé contre le fond de moule 8, s'étend globalement suivant la direction radiale à partir d'une extrémité inférieure du corps 13.

Pour former le récipient, on introduit l'ébauche 2 dans le moule 3, et on injecte un fluide (de préférence un gaz, par exemple de l'air) sous pression. De manière classique, le formage peut comprendre au moins deux phases, à savoir : une phase de présoufflage, lors de laquelle on injecte dans l'ébauche 2 un fluide à une pression dite de présoufflage (la pression de présoufflage étant usuellement inférieure ou égale à 15 bars, et par exemple de l'ordre de 7 à 12 bars), et une phase de soufflage lors de laquelle on injecte dans l'ébauche 2 un fluide à une pression dite de soufflage (la pression de soufflage étant supérieure ou égale à 15 bars, et par exemple de l'ordre de 30 à 40 bars).

Par ailleurs, l'unité de moulage 1 comporte également une tige d'étirage, non représentée sur les figures, apte à s'étendre à l'intérieur de l'ébauche 2, coaxialement à l'axe longitudinal de ladite ébauche 2, et à être déplacée le long dudit axe longitudinal, afin d'étirer ladite ébauche 2 lors de l'étape de présoufflage notamment de manière bien connue en soit.

L'unité de moulage 1 comprend, en deuxième lieu, un système de boxage dit sellette 14. Le terme « boxage » est employé ici pour désigner une opération de repoussage de la matière du récipient en cours de formage. Cette sellette 14 comprend, premièrement, un vérin 15 de commande de la position de l'insert 10 du fond de moule 8 qui est solidarisé à l'extrémité supérieure de ladite sellette 14.

Ledit vérin 15 comporte un piston 16 s'étendant dans un logement 17 pratiqué dans la sellette 14 et une tige 18 portant à son extrémité supérieure ledit insert 10. Le piston 16 et la tige 18 sont solidairement mobiles par rapport au corps de vérin formé par le logement 17 pratiqué dans la sellette entre une position rétractée, correspondant à la position rétractée de l'insert 10 du fond de moule 8, et une position déployée, correspondant à la position déployée dudit insert 10 du fond de moule 8.

En référence aux figures 2 à 5, l'insert 10 s'étend à travers le fond de moule 8 dans l'ouverture 9 coaxialement à la tige d'étirage, ledit insert 10 étant apte à être déplacé depuis une position dite rétractée dans laquelle l'extrémité supérieure de l'insert 10 s'étend à l'intérieur de l'ouverture 9 qui forme dans la sellette 14 un canal central 19 vertical, jusqu'à une position dite active dans laquelle ledit insert 10 fait saillie dudit fond de moule 8.

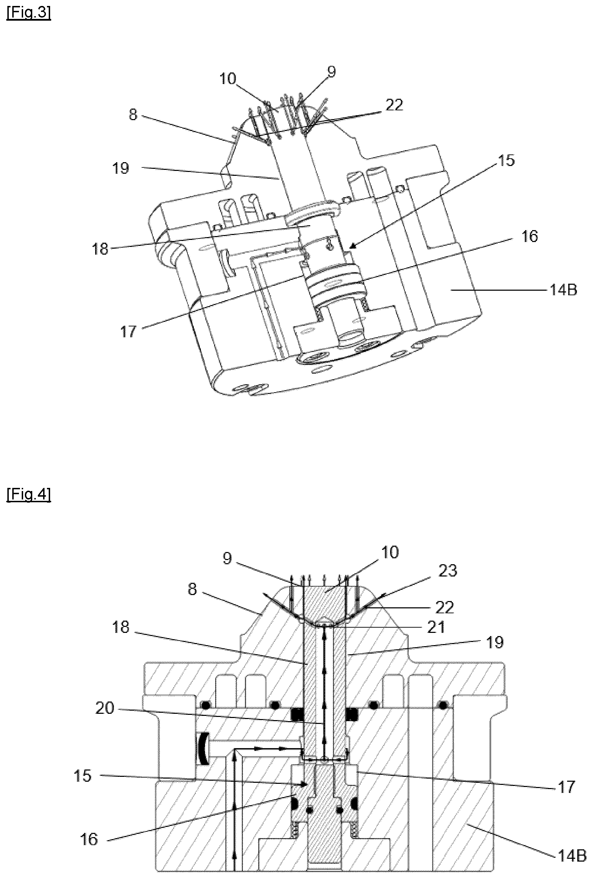

Selon une caractéristique essentielle, en référence aux figures 3 et 4, ledit insert 10 comprend des moyens pneumatiques de décollement de la paroi du fond du récipient soufflé. Plus précisément, ledit insert 10 comporte un évidement dit central 20 connecté à une source de fluide (non représentée sur les figures) sous une pression déterminée et, à son extrémité supérieure, au moins un orifice 21 débouchant dans ledit évidement central 20. Dans cet exemple particulier de réalisation, ledit insert 10 comporte sur sa paroi latérale, à proximité de son extrémité supérieure, une pluralité d'orifices 21 débouchant dans ledit évidement central 20. L'axe desdits orifices 21 forme avec l'axe longitudinal dudit insert 10 un angle compris entre 30 et 80°, et de préférence un angle compris entre 30 et 50°.

On observera que ledit évidement dit central 20 pourrait ne pas être parfaitement centré. En d'autres termes, l'axe de l'évidement central 20 pourrait ne pas être coaxial à l'axe de l'insert 10. Par ailleurs, la section droite dudit évidement central 20 est de préférence circulaire ; toutefois, il est bien évident que la section droite de l'évidement central 20 pourrait présenter une forme quelconque sans pour autant sortir du cadre de l'invention.

Par ailleurs, de manière avantageuse, ledit fond de moule 8 comporte également une pluralité de canaux 22 débouchant sur la face supérieure du fond de moule 8 en formant des orifices 23, lesdits canaux 22 étant connectés fluidiquement à une source de fluide sous pression. Plus précisément, ledit fond de moule 8 comporte une pluralité de canaux 22 débouchant, à une première extrémité, sur la face supérieure du fond de moule 8 en formant des orifices 23, et débouchant, à l'extrémité opposée, dans le canal central 19 dudit fond de moule 8, au travers duquel s'étend l'insert 10. L'axe desdits canaux 22 forme avec l'axe longitudinal de de l'insert 10 un angle compris entre 20 et 80°. Lesdits canaux 22 du fond de moule 8 débouchent dans l'évidement central 19 s'étendent au droit des orifices 21 de l'insert 10 lorsque ledit insert 10 est dans sa position rétractée. Ainsi, lorsque l'insert 10 est dans sa position rétractée, les orifices 21 de l'insert 10 s'étendent au droit des canaux 22 du fond de moule 8 afin de les alimenter en fluide sous pression et décoller le fond du récipient par rapport au fond de moule 8.

Dans cet exemple particulier de réalisation, le canal central 19 du fond de moule 8 ne comporte pas de joint d'étanchéité de telle sorte que l'air s'échappe également au niveau de l'ouverture 9 du fond de moule 8, entre l'insert 10 et le bord de l'ouverture 9 dudit fond de moule 8.

Selon une variante d'exécution, le canal central 19 du fond de moule 8 pourra comporter, au moins au-dessus des canaux 22 débouchant dans ledit canal central 19, un joint d'étanchéité.

De plus, et de préférence, les orifices de l'insert 10 23 sont angulairement répartis autour de la paroi latérale dudit insert 10 et les canaux 22 du fond de moule 8 sont angulairement répartis autour de l'axe central dudit fond de moule 8.

On observera que, de manière avantageuse, selon le moment d'activation de la circulation du fluide sous pression dans l'insert 10 et/ou le fond de moule 8 dans le cycle, et le temps d'activation, lesdits moyens d'activation étant inclus dans une unité de contrôle non représentée sur les figures, l'invention permet de favoriser le décollement de la paroi du fond du récipient soufflé et/ou de refroidir le fond de moule 8 dépourvu, de par son intégration et sa mobilité, de toute source de refroidissement interne, telle qu'une circulation fluidique.

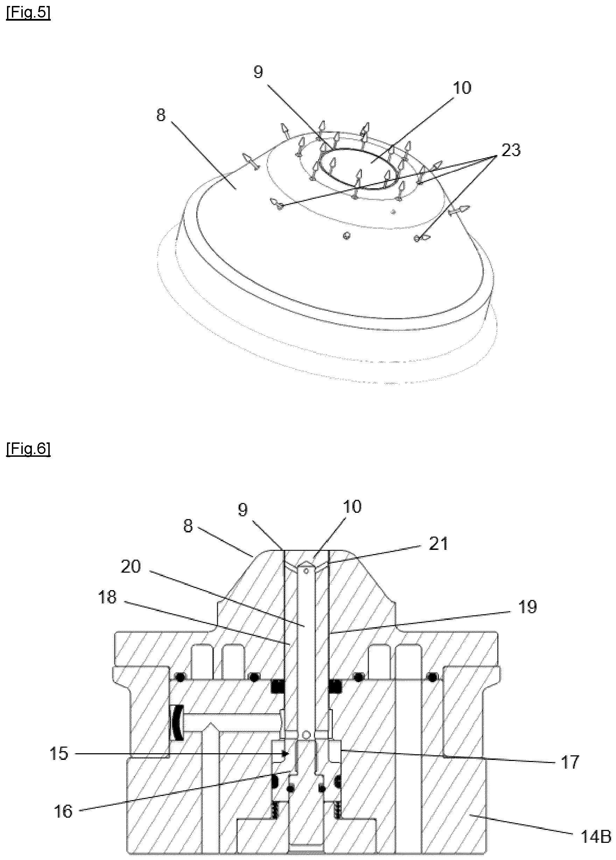

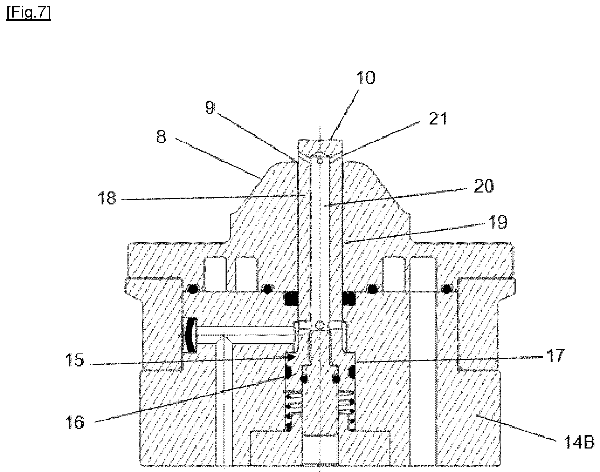

Selon une variante d'exécution, en référence aux figures 6 et 7, l'insert 10 s'étend, de la même manière que précédemment, à travers le fond de moule 8 dans l'ouverture 9 coaxialement à la tige d'étirage, ledit insert 10 étant apte à être déplacé depuis une position dite rétractée dans laquelle l'extrémité supérieure de l'insert 10 s'étend à l'intérieur de l'ouverture 9 qui forme dans la sellette 14 un canal vertical 19, jusqu'à une position dite active dans laquelle ledit insert 10 fait saillie dudit fond de moule 8.

Par ailleurs, de la même manière que précédemment, ledit insert 10 comprend des moyens pneumatiques de décollement de la paroi du fond du récipient soufflé. Plus précisément, ledit insert 10 comporte un évidement central 20 connecté à une source de fluide (non représentée sur les figures) sous une pression déterminée et, à son extrémité supérieure, au moins un orifice 21 débouchant dans ledit évidement central 20. Dans cet exemple particulier de réalisation, ledit insert 10 comporte sur sa paroi latérale, à proximité de son extrémité supérieure, une pluralité d'orifices 21 débouchant dans ledit évidement central 20. L'axe desdits orifices 21 forme avec l'axe longitudinal dudit insert 10 un angle compris entre 30 et 80°, et de préférence un angle compris entre 30 et 50°.

Ainsi, cette variante d'exécution se distingue de celle précédemment décrite par le fait que le fond de moule 8 ne comporte pas de canaux 22 débouchant dans le canal central 19.

## Revendications

1. Unité de moulage (1) pour la fabrication d'un récipient à partir d'une préforme (2) en matière plastique, cette unité de moulage (1) comportant au moins: un moule (3) comprenant une paroi (4) formée par deux demi-moules (3A, 3B) articulés définissant une cavité (5) interne répartie autour d'un axe principal du moule (3) et définissant au moins partiellement une empreinte (6) pour une paroi latérale ou corps et présentant, à une extrémité inférieure, une ouverture (7) inférieure, un fond de moule (8) qui vient s'emboîter dans l'ouverture inférieure (7) et présente une surface supérieure définissant une empreinte au moins partielle du fond du récipient, le fond de moule (8) étant percé en son centre d'une ouverture (9), un vérin (15) comprenant un piston (16) et une tige (17) à l'extrémité de laquelle est monté un insert (10) apte à coulisser au travers de ladite ouverture (9) du fond de moule (8), entre une position dite déployée dans laquelle une extrémité libre de l'insert (10) fait saillie par rapport au fond de moule (8) et une position dite rétractée dans laquelle l'extrémité libre de l'insert (10) se trouve au voisinage du fond de moule (8), et une sellette (14) sur laquelle le fond de moule (8) est montée, ladite sellette (14) comprenant au moins un étage inférieur (14A) et un étage supérieur (14B) monté sur l'étage inférieur (14A), ladite sellette (14) définissant intérieurement un logement (17) dans lequel est monté le piston (16) du vérin (15), le fond de moule (8) et l'insert (10) comprenant des moyens pneumatiques de décollement de la paroi du fond du récipient soufflé, lesdits moyens pneumatiques de décollement procurant simultanément un refroidissement dudit fond du récipient soufflé, et dans lesquels ledit insert (10) comporte un évidement dit central (20) connecté à une source de fluide sous une pression déterminée et ledit insert (10) comporte sur sa paroi latérale, à proximité de son extrémité supérieure, une pluralité d'orifices (21) débouchant dans ledit évidement central (20) ; **caractérisée en ce que** :
- ledit fond de moule (8) comporte une pluralité de canaux (22) débouchant, à une première extrémité, sur la face supérieure du fond de moule (8) en formant des orifices (23), et débouchant, à l'extrémité opposée, dans le canal central (19) de l'ouverture (9) du fond de moule (8) dans lequel coulisse l'insert (10) ; et
- les canaux (22) du fond de moule (8) débouchant dans le canal central (19) s'étendent au droit des orifices (21) de l'insert (10) lorsque ledit insert (10) est dans sa position rétractée.

2. Unité de moulage (1) suivant la revendication 1 **caractérisée en ce que** l'axe desdits orifices (21) forme avec l'axe longitudinal de l'insert (10) un angle compris entre 30 et 80°.

3. Unité de moulage (1) suivant la revendication 1 **caractérisée en ce que** le canal central (19) du fond de moule (8) comporte, au moins au-dessus des canaux (22) débouchant dans ledit canal central (19), un joint d'étanchéité.

4. Unité de moulage (1) suivant l'une quelconque des revendications 1 à 3 **caractérisée en ce que** l'axe desdits canaux (22) du fond de moule (8) forme avec l'axe longitudinal de l'insert (8) un angle compris entre 20 et 80°.

5. Unité de moulage (1) suivant l'une quelconque des revendications 1 à 4 **caractérisée en ce que** les orifices (21) de l'insert (10) sont angulairement répartis autour de la paroi latérale dudit insert (10).

6. Unité de moulage (1) suivant l'une quelconque des revendications 1 à 5 **caractérisée en ce que** les canaux (27) de l'insert (8) sont angulairement répartis autour de l'axe central dudit l'insert (8).

7. Unité de moulage (1) suivant l'une quelconque des revendications 1 à 6 **caractérisée en ce qu'**elle comporte des moyens d'activation de circulation du fluide sous pression dans le fond de moule (8) et dans l'insert (10) dans le cycle de fabrication des récipients aptes à contrôler le début de ladite activation et le temps d'activation de manière à favoriser le décollement de la paroi du fond du récipient soufflé et/ou de refroidir l'insert (10) et/ou le fond de moule (8).

## Patentansprüche

1. Formeinheit (1) zur Herstellung eines Behälters aus einem Vorformling (2) aus Kunststoff, wobei diese Formeinheit (1) mindestens beinhaltet: eine Form (3), die eine Wand (4) umfasst und die durch zwei angelenkte Formhälften (3A, 3B) gebildet wird, die einen inneren Hohlraum (5) definieren, der um eine Hauptachse der Form (3) verteilt ist und mindestens partiell ein Formnest (6) für eine Seitenwand oder einen Körper definiert und an einem unteren Ende eine untere Öffnung (7) aufweist, einen Formboden (8), der in die untere Öffnung (7) eingefügt wird und eine obere Fläche aufweist, die ein mindestens partielles Formnest des Bodens des Behälters definiert, wobei der Formboden (8) in seinem Zentrum von einer Öffnung (9) durchbohrt ist, einen Zylinder (15), der einen Kolben (16) und eine Stange (17) umfasst, an deren Ende ein Einsatz (10) montiert ist, der geeignet ist, durch die Öffnung (9) des Formbodens (8) zu gleiten zwischen einer sogenannten ausgefahrenen Position, in der ein freies Ende des Einsatzes (10) in Bezug auf den Formboden (8) vorspringt, und einer sogenannten eingefahrenen Position, in der sich das freie Ende des Einsatzes (10) in der Umgebung des Formbodens (8) befindet, und einen Sattel (14), auf dem der Formboden (8) montiert ist, wobei der Sattel (14) mindestens eine untere Stufe (14A) und eine obere Stufe (14B), die auf der unteren Stufe (14A) montiert ist, umfasst, wobei der Sattel (14) innen eine Aufnahme (17) definiert, in welcher der Kolben (16) des Zylinders (15) montiert ist, wobei der Formboden (8) und der Einsatz (10) pneumatische Mittel zum Lösen der Wand vom Boden des blasgeformten Behälters umfassen, wobei die pneumatischen Mittel zum Lösen gleichzeitig eine Kühlung des Bodens des blasgeformten Behälters verschaffen, und wobei der Einsatz (10) eine sogenannte zentrale Ausnehmung (20) beinhaltet, die an eine Fluidquelle unter einem bestimmten Druck angeschlossen ist, und der Einsatz (10) an seiner Seitenwand in der Nähe seines oberen Endes eine Mehrzahl von Bohrungen (21) aufweist, die in die zentrale Ausnehmung (20) münden; **dadurch gekennzeichnet, dass**:
- der Formboden (8) eine Mehrzahl von Kanälen (22) beinhaltet, die an einem ersten Ende an der Oberseite des Formbodens (8) münden, wobei sie Bohrungen (23) bilden, und an dem entgegengesetzten Ende in den zentralen Kanal (19) der Öffnung (9) des Formbodens (8) münden, in dem der Einsatz (10) gleitet; und
- die Kanäle (22) des Formbodens (8), die in den zentralen Kanal (19) münden, sich auf Höhe der Bohrungen (21) des Einsatzes (10) erstrecken, wenn der Einsatz (10) in seiner eingefahrenen Stellung ist.

2. Formeinheit (1) nach Anspruch 1, **dadurch gekennzeichnet, dass** die Achse der Bohrungen (21) mit der Längsachse des Einsatzes (10) einen Winkel zwischen 30 und 80° bildet.

3. Formeinheit (1) nach Anspruch 1, **dadurch gekennzeichnet, dass** der zentrale Kanal (19) des Formbodens (8) mindestens oberhalb der in den zentralen Kanal (19) mündenden Kanäle (22) eine Dichtung beinhaltet.

4. Formeinheit (1) nach einem der Ansprüche 1 bis 3, **dadurch gekennzeichnet, dass** die Achse der Kanäle (22) des Formbodens (8) mit der Längsachse des Einsatzes (8) einen Winkel zwischen 20 und 80° bildet.

5. Formeinheit (1) nach einem der Ansprüche 1 bis 4, **dadurch gekennzeichnet, dass** die Bohrungen (21) des Einsatzes (10) winklig um die Seitenwand des Einsatzes (10) verteilt sind.

6. Formeinheit (1) nach einem der Ansprüche 1 bis 5, **dadurch gekennzeichnet, dass** die Kanäle (27) des Einsatzes (8) winklig um die zentrale Achse des Einsatzes (8) verteilt sind.

7. Formeinheit (1) nach einem der Ansprüche 1 bis 6, **dadurch gekennzeichnet, dass** sie Mittel zur Aktivierung der Zirkulation des Fluids unter Druck in dem Formboden (8) und in dem Einsatz (10) beim Herstellungszyklus der Behälter umfasst, die geeignet sind, den Beginn der Aktivierung und die Aktivierungszeit so zu steuern, dass das Lösen der Wand vom Boden des blasgeformten Behälters begünstigt wird und/oder der Einsatz (10) und/oder der Formboden (8) gekühlt werden.

## Claims

1. Moulding unit (1) for producing a container from a plastic preform (2), this moulding unit (1) comprising at least: a mould (3) comprising a wall (4) formed by two articulated mould halves (3A, 3B) defining an internal cavity (5) distributed around a main axis of the mould (3) and at least partially defining a cavity (6) for a side wall or body and having, at a lower end, a lower opening (7), a mould bottom (8) which fits into the lower opening (7) and has an upper surface defining an at least partial impression of the bottom of the container, the mould bottom (8) being pierced at its centre with an opening (9), an actuator (15) comprising a piston (16) and a rod (17), at the end of which is mounted an insert (10) that is able to slide through said opening (9) in the mould bottom (8), between a position referred to as the deployed position, in which a free end of the insert (10) projects from the mould bottom (8), and a position referred to as the retracted position, in which the free end of the insert (10) is in the vicinity of the mould bottom (8), and a saddle (14) on which the mould bottom (8) is mounted, said saddle (14) comprising at least one lower stage (14A) and one upper stage (14B) mounted on the lower stage (14A), said saddle (14) internally defining a housing (17) in which the piston (16) of the actuator (15) is mounted, the mould bottom (8) and the insert (10) comprising pneumatic means for detaching the wall from the bottom of the blown container, said pneumatic detachment means simultaneously cooling said bottom of the blown container, and in which said insert (10) comprises a recess referred to as central recess (20) connected to a source of fluid under a determined pressure and said insert (10) comprises, on its side wall, close to its upper end, a plurality of orifices (21) opening into said central recess (20); **characterized in that**:
- said mould bottom (8) comprises a plurality of channels (22) opening at a first end onto the upper face of the mould bottom (8), forming orifices (23), and opening at the opposing end into the central channel (19) of the opening (9) of the mould bottom (8) in which the insert (10) slides; and
- the channels (22) of the mould bottom (8) opening into the central channel (19) extend in line with the orifices (21) of the insert (10) when said insert (10) is in its retracted position.

2. Moulding unit (1) according to Claim 1, **characterized in that** the axis of said orifices (21) forms an angle of between 30 and 80° with the longitudinal axis of the insert (10).

3. Moulding unit (1) according to Claim 1, **characterized in that** the central channel (19) of the mould bottom (8) comprises a seal, at least above the channels (22) opening into said central channel (19).

4. Moulding unit (1) according to any one of Claims 1 to 3, **characterized in that** the axis of said channels (22) of the mould bottom (8) forms an angle of between 20 and 80° with the longitudinal axis of the insert (8).

5. Moulding unit (1) according to any one of Claims 1 to 4, **characterized in that** the orifices (21) of the insert (10) are angularly distributed around the side wall of said insert (10).

6. Moulding unit (1) according to any one of Claims 1 to 5, **characterized in that** the channels (27) of the insert (8) are angularly distributed about the central axis of said insert (8).

7. Moulding unit (1) according to any one of Claims 1 to 6, **characterized in that** it comprises means for activating the circulation of the pressurized fluid in the mould bottom (8) and in the insert (10) in the production cycle of the containers, capable of controlling the start of said activation and the period of activation so as to promote the detachment of the wall from the bottom of the blown container and/or cooling the insert (10) and/or the mould bottom (8).
